# EUROPÄISCHE PATENTSCHRIFT

(11) **EP 3 887 300 B1**
(45) Veröffentlichungstag und Bekanntmachung des Hinweises auf die Patenterteilung: **30.04.2025**
(21) Anmeldenummer: 19798664.9
(22) Anmeldetag: 12.11.2019
(51) Int. Cl.: B66B 19/00, B23Q 17/24, B25J 9/16

(54) **MONTAGEVORRICHTUNG UND VERFAHREN ZUM AUTOMATISIERTEN BOHREN VON LÖCHERN IN GEBÄUDEWÄNDE MIT EINER AUTOMATISIERTEN ERKENNUNG VON VERSCHLEISSMARKEN AM BOHRER**
MOUNTING DEVICE AND METHOD FOR THE AUTOMATED DRILLING OF HOLES IN BUILDING WALLS WITH AN AUTOMATED DETECTION OF DRILL WEAR MARKS
DISPOSITIF DE MONTAGE ET PROCÉDÉ DE PERÇAGE AUTOMATISÉ DES TROUS DANS DES MURS DE BÂTIMENT UNE DÉTECTION AUTOMATISÉE DE MARQUES D'USURE DE PERÇAGE

(30) Priorität: 27.11.2018 EP 18208422
(43) Veröffentlichungstag der Anmeldung: 06.10.2021
(73) Patentinhaber: INVENTIO AG, 6052 Hergiswil (CH)
(72) Erfinder: CAMBRUZZI, Andrea, 8057 Zürich (CH); STUDER, Christian, 6010 Kriens (CH); OLCZYK, Eliza, 6003 Luzern (CH); SIMMONDS, Oliver, 6004 Luzern (CH); ZIMMERLI, Philipp, 4624 Härkingen (CH)
(74) Vertreter: Inventio AG
(86) Internationale Anmeldenummer: PCT/EP2019/081018
(87) Internationale Veröffentlichungsnummer: WO 2020/108982

(56) Entgegenhaltungen:
- EP-A1- 3 318 837
- WO-A1-2014/132845
- WO-A1-2017/016783
- JP-A- S6 023 277
- JP-B2- 3 037 759
- US-A- 4 420 253
- US-A- 4 561 776

## Beschreibung

Die Erfindung betrifft eine Montagevorrichtung gemäss dem Oberbegriff des Anspruchs 1 und ein Verfahren mit den Merkmalen des Anspruchs 12.

In der WO 2016/066615 A2 wird eine Montagevorrichtung mit einem Bohrroboter beschrieben, welche automatisiert Löcher in Wände und Decken eines Gebäudes bohren kann. Die Montagevorrichtung weist einen Wagen mit angetriebenen und lenkbaren Rädern auf, auf dem der Bohrroboter angeordnet ist. Damit kann die Montagevorrichtung in dem betreffenden Gebäude verfahren und an einer zum Bohren der Löcher notwendige Position positioniert werden.

Die WO 2017/016783 A1 beschreibt eine automatisierte Montagevorrichtung zur Durchführung von Installationen in einem Aufzugschacht einer Aufzuganlage. Die Montagevorrichtung verfügt über eine Bohrvorrichtung mit einem Bohrer, welche automatisiert Löcher in Wände des Aufzugschachts bohren kann. Eine die Bohrvorrichtung tragende Trägerkomponente der Montagevorrichtung kann innerhalb des Aufzugschachts verlagert werden. In der WO 2017/016783 A1 ist beschrieben, dass zur Erkennung eines verschlissenen oder defekten Bohrers ein Vorschub beim Bohren und/oder eine Zeitdauer zum Einbringen einer Bohrung mit einer gewünschten Tiefe überwacht werden. Beim Unterschreiten eines Vorschubgrenzwerts und/oder beim Überschreiten eines Zeitdauergrenzwerts wird der eingesetzte Bohrer als nicht mehr in Ordnung erkannt.

Ein Bohrer kann verschiedene Defekte aufweisen, welche das Bohren von Löchern in Wände eines Gebäudes negativ beeinflussen können. Beispielsweise kann ein Durchmesser des Bohrers nicht mehr gross genug sein, so dass das mit dem Bohrer gebohrte Loch einen zu geringen Durchmesser aufweist. Bohrer zum Bohren in Beton weisen häufig an ihrer Spitze eine so genannte Krone aus besonders widerstandsfähigen Material, insbesondere Hartmetall auf. Wenn Teile der Krone abgebrochen sind oder sich die Krone komplett gelöst hat, wird das Bohren eines Lochs ebenfalls negativ beeinflusst.

Die US 4561776 A, WO 2014/132845 A1, EP 3318837 A1 und US 4420253 A beschreiben Werkzeugmaschinen zum Bohren von Löchern in Werkstücke, bei denen auf Basis eines digitalen Bilds eines Bohrers der Zustand des Bohrers beurteilt wird. Bei der US 4420253 A wird zusätzlich eine Farbinformation ausgewertet.

Demgegenüber ist es insbesondere die Aufgabe der Erfindung, eine Montagevorrichtung und ein Verfahren vorzuschlagen, welche ein zuverlässiges Bohren von Löchern in Wände eines Gebäudes ermöglichen. Erfindungsgemäss wird diese Aufgabe mit einer Montagevorrichtung mit den Merkmalen des Anspruchs 1 und einem Verfahren mit den Merkmalen des Anspruchs 12 gelöst.

Die erfindungsgemässe Montagevorrichtung zum automatisierten Bohren von Löchern in Gebäudewände weist eine Bohrvorrichtung mit einem Bohrer auf. Erfindungsgemäss verfügt die Montagevorrichtung über eine optische Erfassungseinrichtung zur Erfassung eines digitalen Bilds zumindest eines Teils des Bohrers der Bohrvorrichtung und eine Steuerungseinrichtung zur Ansteuerung der Bohrvorrichtung und der optischen Erfassungseinrichtung. Die Steuerungseinrichtung ist dazu vorgesehen, das genannte digitale Bild auszuwerten und dabei einen Zustand des Bohrers zu beurteilen.

Gemäss der Erfindung enthält das genannte digitale Bild Informationen über eine Farbe des Bohrers. Die Steuerungseinrichtung ist dazu vorgesehen, die Farbe des Bohrers zu prüfen und den Zustand des Bohrers auf Basis der Ergebnisse der genannten Prüfung der Farbe des Bohrers zu beurteilen. Aus der Farbe des Bohrers lässt sich insbesondere ableiten, ob der Bohrer während einer vorhergehenden Bohrung sehr heiss geworden ist. Bei einer sehr starken Erwärmung läuft der Bohrer blau an, was von der Steuerungseinrichtung erkannt werden kann. Eine starke Erwärmung oder Überhitzung kann dazu führen, dass sich im Bohrer innere Spannungen aufbauen und/oder das Material des Bohrers spröde wird. Beide Effekte können dazu führen, dass Teile des Bohrers abbrechen oder der Bohrer auseinanderbricht. Eine starke Erwärmung oder Überhitzung kann bei Bohrern mit angelöteter Krone einen weiteren negativen Effekt haben. Die Erwärmung kann so gross sein, dass das für das Anlöten der Krone verwendete Lot schmilzt oder zumindest weich wird. Dies führt dazu, dass die Gefahr eines Abbrechens der Krone sehr gross wird. Die Krone kann dann zwar immer noch korrekt an der Spitze des Bohrers angeordnet sein, sich aber bei der nächsten starken Beanspruchung von der Spitze lösen, was den Bohrer unbrauchbar macht. Die genannten Effekte können einzeln auftreten oder sich gegenseitig verstärken. Zusammenfassend führen eine starke Erwärmung oder Überhitzung zu einer erhöhten Gefahr bzw. Wahrscheinlichkeit, dass ein Bohrer bei weiterer Benutzung demnächst versagt. Die Steuerungseinrichtung ist damit insbesondere so ausgeführt, dass sie bei Erkennung einer für ein Überhitzen des Bohrers typischen Farbe in dem digitalen Bild, den Zustand des Bohrers als niO einstuft.

Die Steuerungseinrichtung ist insbesondere so ausgeführt, dass sie insbesondere die Farbe im Bereich der Spitze des Bohrers auswertet. Sie kann insbesondere eine Vorverarbeitung durchführen, bei der zusammenhängende Bereiche des Bohrers mit ähnlicher Farbe identifiziert werden. Dies kann beispielsweise mit einer so genannten Blob-Analyse durchgeführt werden. Eine Farbe kann dann beispielsweise nur berücksichtigt werden, wenn sie auf einer zusammenhängenden Fläche oder einer Gesamtfläche mit einem Mindest-Flächeninhalt vorkommt.

Bei der Prüfung der Farbe des Bohrers kann die Farbe mit gespeicherten Vergleichsfarben verglichen werden. Beispielsweise kann, sobald die Farbe mit einer Vergleichsfarbe übereinstimmt, der Zustand des Bohrers als niO eingestuft werden.

Erfindungsgemäss ist die Steuerungseinrichtung dazu vorgesehen, einen Blauanteil der Farbe des Bohrers zu bestimmen und den Zustand des Bohrers auf Basis des genannten Blauanteils zu beurteilen. Bohrer laufen bei sehr starker Erwärmung insbesondere blau an. Damit ist eine blaue Farbe des Bohrers ein zuverlässiger Hinweis für eine starke, eventuell zu starke Erwärmung des Bohrers. Wie oben beschrieben kann eine starke Erwärmung zu einer von aussen nicht sichtbaren Schädigung des Bohrers führen. Damit kann mittels einer Prüfung des Blauanteils des Bohrers besonders zuverlässig der Zustand des Bohrers beurteilt werden. Der Zustand des Bohrers wird insbesondere dann als niO eingestuft, wenn der Blauanteil einen festgelegten Schwellwert überschreitet.

Eine Farbe lässt sich auf Basis der Lehre der additiven Farbmischung in die drei Grundfarben Rot, Grün und Blau auftrennen. Eine Farbe kann damit durch die Intensität der Anteile der einzelnen Grundfarben definiert werden. Unter dem genannten Blauanteil der Farbe des Bohrers wird hier der Anteil der blauen Grundfarbe an der Farbe des Bohrers verstanden. Wenn ausschliesslich der Blauanteil der Farbe des Bohrers zur Beurteilung des Zustands des Bohrers verwendet werden soll, kann die optische Erfassungseinrichtung insbesondere nur Lichtsensoren aufweisen, die blaues Licht erfassen können oder als eine Schwarz-Weiss-Digital-Kamera mit einem Filter, der nur blaues Licht durchlässt, ausgeführt sein.

Beim erfindungsgemässen Verfahren zur Beurteilung eines Zustands eines Bohrers einer Bohrvorrichtung einer Montagevorrichtung zum automatisierten Bohren von Löchern in Gebäudewände wird mittels einer an der Montagevorrichtung angeordneten optischen Erfassungseinrichtung ein digitales Bild zumindest eines Teils des Bohrers der Bohrvorrichtung erfasst. Die Bohrvorrichtung und die optische Erfassungseinrichtung werden von einer Steuerungseinrichtung angesteuert. Die Steuerungseinrichtung wertet das genannte digitale Bild aus und beurteilt dabei einen Zustand des Bohrers. Das genannte digitale Bild enthält Informationen über eine Farbe des Bohrers enthält und die Steuerungseinrichtung prüft die Farbe und einen Blauanteil der Farbe des Bohrers und beurteilt den Zustand des Bohrers auf Basis der Ergebnisse der genannten Prüfungen der Farbe und des Blauanteils der Farbe des Bohrers.

Damit wird ermöglicht, dass schon bevor es zu einem Bohren eines Lochs mit einem nicht mehr geeigneten Bohrer kommt, der Zustand des Bohrers beurteilt werden kann. Das Bohren eines Lochs kann damit sehr zuverlässig durchgeführt werden.

Die beschriebenen Ausführungsbeispiele betreffen gleichermassen die erfindungsgemässe Montagevorrichtung und das erfindungsgemässe Verfahren. In anderen Worten lassen sich im Folgenden beispielsweise unter Bezugnahme auf die Montagevorrichtung genannte Merkmale auch als Verfahrensschritte implementieren, und umgekehrt.

Die erfindungsgemässe Montagevorrichtung kann insbesondere zur zumindest teilweise automatisierten Installation von so genanntem Schachtmaterial in einem Aufzugschacht einer Aufzuganlage eingesetzt werden. Unter Schachtmaterial sind alle Bauteile zu verstehen, die in einem Aufzugschacht der Aufzuganlage an einer Schachtwand befestigt werden. Dazu zählen beispielsweise so genannte Schienenbügel oder Schienenbügelteile, insbesondere Schienenbügelunterteile, mittels welchen Führungsschienen der Aufzuganlage an der Schachtwand fixiert werden. Darüber hinaus kann Schachtmaterial auch als Befestigungsmaterial für Schachttüren, Beleuchtung oder Verkabelungen ausgeführt sein. Die Montagevorrichtung weist dazu insbesondere eine Trägerkomponente auf, an welcher die Bohrvorrichtung angeordnet ist. Die Trägerkomponente und damit die Bohrvorrichtung kann innerhalb des Aufzugschachts verlagert werden und damit an unterschiedlichen Positionen im Aufzugschacht Löcher in Schachtwände des Aufzugschachts bohren. Der grundsätzliche Aufbau der Montagevorrichtung kann beispielsweise entsprechend einer in der WO 2017/016782 A1 beschriebenen Montagevorrichtung ausgeführt sein.

Die erfindungsgemässe Montagevorrichtung kann auch für Montagen und Installationen ausserhalb eines Aufzugschachts eines Aufzugs verwendet werden. Beispielsweise können mittels der Montagevorrichtungen Löcher an verschiedenen Stellen in einer Gebäudewand gebohrt werden, mittels welchen Kabelkanäle oder Lüftungsrohre fixiert werden können. Um die verschiedenen Stellen erreichen zu können, kann die Montagevorrichtung beispielsweise antreibbare und lenkbare Räder aufweisen.

Die erfindungsgemässe Montagevorrichtung ist dazu vorgesehen, nur während der durchzuführenden Installation oder Montage am betreffenden Montageort zu sein und nach Abschluss der Installation oder Montage zum nächsten Installationsort gebracht zu werden. Die erfindungsgemässe Montagevorrichtung kann damit auch als eine mobile Montagevorrichtung bezeichnet werden.

Unter einem automatisierten Bohren von Löchern soll hier verstanden werden, dass die Bohrvorrichtung zum Bohren der Löcher von einer Steuerungseinrichtung unter Anwendung von vorgegebenen Regeln angesteuert wird. In der Steuerungseinrichtung ist dazu insbesondere ein Programm gespeichert, in welchem die genannten Regeln kodiert sind. Das automatisierte Bohren kann beispielsweise von einem Bediener oder von einem anderen Programm gestartet werden.

Unter einer Gebäudewand soll hier eine Fläche verstanden werden, welche einen Raum eines Gebäudes nach innen oder das Gebäude nach aussen begrenzt. Eine Gebäudewand kann damit beispielsweise als eine vertikal verlaufende Wand, ein Boden oder eine Decke ausgeführt sein. Insbesondere ist die Gebäudewand als eine Schachtwand eines Aufzugschachts einer Aufzuganlage ausgeführt. Es ist aber auch möglich, dass die Gebäudewand als Teil einer Brücke oder eines sonstigen Bauwerks ausgeführt ist. Die Gebäudewand besteht insbesondere aus Beton, der insbesondere Armierungen enthält.

Die Bohrvorrichtung ist insbesondere als eine Schlagbohrmaschine ausgeführt, welche besonders für das Bohren in Beton geeignet ist. Sie wird insbesondere von einer mechatronischen Installationskomponente in Form eines Industrieroboters geführt. Die Installationskomponente kann die Bohrvorrichtung damit beim Bohren eines Lochs in eine Gebäudewand führen und auch so vor der optischen Erfassungsvorrichtung positionieren, dass die optische Erfassungsvorrichtung von einem relevanten Teil des Bohrers oder des gesamten Bohrers ein digitales Bild erfassen kann.

Der Bohrer ist insbesondere als ein Spiralbohrer in Form eines Stein- oder Betonbohrers ausgeführt. Der Bohrer weist insbesondere an seiner Spitze eine Platte oder Krone aus Hartmetall auf, die über eine Lötverbindung mit dem restlichen Bohrer verbunden ist, der beispielsweise aus Werkzeugstahl ausgeführt ist.

Die optische Erfassungseinrichtung kann auf unterschiedlichste Weise ausgeführt sein, sie kann unterschiedliche optische Eigenschaften des Bohrers erfassen und in einem digitalen Bild speichern. Sie ist insbesondere als eine Digital-Kamera ausgeführt, die auch Farben erfassen und aufzeichnen kann. Eine Digital-Kamera verfügt dazu insbesondere über drei verschiedene Arten von Lichtsensoren, nämlich Lichtsensoren für rotes, gelbes und blaues Licht. Aus diesen drei Grundfarben können sämtliche Farben zusammengesetzt werden. Es ist auch möglich, dass die optische Erfassungseinrichtung nur eine oder zwei verschiedene Arten von Lichtsensoren aufweist, wobei sie insbesondere über Lichtsensoren für blaues Licht verfügt. Die optische Erfassungseinrichtung kann beispielsweise auch als ein Scanner oder ein so genanntes Spektralphotometer ausgeführt sein.

Die Ausgestaltung des genannten digitalen Bilds ist von der Ausführung der optischen Erfassungseinrichtung abhängig. Damit kann auch das digitale Bild auf verschiedenste Arten ausgeführt sein. Es enthält Informationen über optische Eigenschaften des Bohrers in digitaler Form, die mit einer Steuerungseinrichtung ausgewertet werden können.

Die Steuerungseinrichtung zur Ansteuerung der Bohrvorrichtung und der optischen Erfassungseinrichtung kann als eine einzige Steuerungseinrichtung ausgeführt sein. Es ist auch möglich, dass sie aus mehreren Steuerungseinrichtungen besteht, die einzelne Komponenten der Montagevorrichtung ansteuern und miteinander in Kommunikationsverbindung stehen. Die Steuerungseinrichtung kann neben der Bohrvorrichtung und der optischen Erfassungsvorrichtung insbesondere weitere Komponenten, wie beispielsweise die genannte Installationskomponente in Form eines Industrieroboters oder eine Fixierungskomponente oder eine Verlagerungskomponente der Montagvorrichtung ansteuern.

Die Steuerungseinrichtung ist dazu vorgesehen, das digitale Bild auszuwerten und dabei den Zustand des Bohrers zu beurteilen. Darunter ist zu verstehen, dass die Steuerungseinrichtung so programmiert ist, dass sie das digitale Bild auswertet und dabei den Zustand des Bohrers beurteilt. Unter einer Beurteilung des Zustands des Bohrers soll insbesondere eine Unterscheidung zwischen einem Zustand "in Ordnung" (iO) und einem Zustand "nicht in Ordnung" (niO) verstanden werden. Neben den genannten Zuständen kann es weitere Zustände, wie beispielsweise "in Ordnung mit Einschränkungen" geben.

Die Steuerungseinrichtung ist insbesondere dazu vorgesehen, die Beurteilung des Zustands des Bohrers in regelmässigen oder unregelmässigen Abständen zu wiederholen. Beispielsweise kann die Beurteilung nach jedem Bohren eines Lochs oder nach dem Bohren einer festgelegten Anzahl von Löchern erfolgen. Die genannte Anzahl kann dabei abhängig vom letzten erkannten Zustand des Bohrers sein. Wenn beispielsweise bereits ein Verschleiss des Bohrers erkannt wurde, kann die genannte Anzahl kleiner sein, als wenn noch kein Verschleiss erkannt wurde. Ausserdem kann in Abhängigkeit von festgelegten Bedingungen eine Beurteilung auch unabhängig von der Anzahl der gebohrten Löcher seit der letzten Beurteilung erfolgen.

Ziel der Beurteilung des Zustands des Bohrers ist es, einen für eine erfolgreiche Bohrung ungenügenden Zustand des Bohrers zu erkennen, bevor mit einem derartigen Bohrer eine Bohrung begonnen wird. Das Bohren mit einem Bohrer mit einem ungenügenden Zustand kann zu einem schlechten Bohrergebnis führen, die Bohrung kann sehr lange dauern oder im schlimmsten Fall kann es zu einem Abbrechen des Bohrers kommen. Ein Abbrechen des Bohrers im Bohrloch macht sehr häufig ein Eingreifen eines Bedieners der Montagevorrichtung notwendig, so dass eine automatische Durchführung von Bohrungen unterbrochen werden muss. Eine derartige Unterbrechung ist unerwünscht, da sie immer Zeit beansprucht.

In Ausgestaltung der Erfindung ist die Steuerungseinrichtung dazu vorgesehen, auf Basis des erkannten Zustands des Bohrers zu entscheiden, den Bohrer weiterzuverwenden oder einen Wechsel des Bohrers zu veranlassen. Die Steuerungseinrichtung ist insbesondere dazu vorgesehen, den Bohrer weiterzuverwenden, wenn sein Zustand als iO eingestuft wird und einen Wechsel des Bohrers zu veranlassen, wenn sein Zustand als niO eingestuft wird. Damit kann ein besonders zuverlässiges Bohren von Löchern in Gebäudewände gewährleistet werden. Um einen Wechsel des Bohrers zu veranlassen, kann die Steuerungseinrichtung eine Information an einen Bediener der Montagevorrichtung ausgeben, den Bohrer zu wechseln. Es ist auch möglich, dass die Montagevorrichtung eine zweite Bohrvorrichtung mit einem weiteren Bohrer aufweist und der Wechsel des Bohrers dadurch ausgeführt wird, dass die genannte zweite Bohrvorrichtung verwendet wird. Ausserdem kann die Montagevorrichtung eine automatisierte Bohrer-Wechselvorrichtung aufweisen, mittels welcher der alte Bohrer aus der Bohrvorrichtung entfernt und ein neuer Bohrer eingesetzt werden kann.

In Ausgestaltung der Erfindung weist die Montagevorrichtung eine mechatronische Installationskomponente zum Führen der Bohrvorrichtung auf. Die mechatronische Installationskomponente wird von der Steuerungseinrichtung angesteuert und die Steuerungseinrichtung ist dazu vorgesehen, die Installationskomponente so anzusteuern, dass die Bohrvorrichtung und der Bohrer so vor der optischen Erfassungsvorrichtung positioniert werden, dass ein digitales Bild zumindest eines Teils des Bohrers erfasst und damit erzeugt werden kann. Damit kann die Bohrvorrichtung sehr flexibel an der Montagevorrichtung positioniert werden. Ausserdem kann die optische Erfassungsvorrichtung mit einem Abstand zur Bohrvorrichtung so an der Montagevorrichtung angeordnet werden, dass sie das Bohren von Löchern nicht behindert und ausserdem während des Bohrens nicht beschädigt oder verschmutzt wird.

In Ausgestaltung der Erfindung ist die Steuerungseinrichtung dazu vorgesehen, die Installationskomponente so anzusteuern, dass die Bohrvorrichtung und den Bohrer so vor der optischen Erfassungsvorrichtung positioniert werden, dass von einer am Bohrer angeordneten Verschleissmarke ein digitales Bild erfasst und damit erzeugt werden kann. Damit ist eine besonders sichere Bestimmung des Zustands des Bohrers möglich. Der Zustand des Bohrers wird insbesondere dann als iO eingestuft, wenn die Verschleissmarke in dem digitalen Bild noch erkannt werden, kann. Der Bohrer kann beispielsweise an einer Aussenfläche, insbesondere an einer Aussenfläche einer an der Spitze des Bohrers nach innen gerichtete Nut als Verschleissmarkierung aufweisen. Wenn an der genannten Aussenfläche Material abgetragen wird, also Verschleiss auftritt, nimmt eine Tiefe der Nut immer mehr ab, bis sie nicht mehr zu sehen ist, also nicht mehr auf dem digitalen Bild erkannt werden kann.

Es ist auch möglich, dass zur Beurteilung des Zustands des Bohrers Mustererkennungsverfahren oder so genanntes Machine-Learning verwendet werden. Dabei werden der Steuerungseinrichtung in einer Lernphase viele digitale Bilder mit Bohrern gemeinsam mit dem jeweiligen Zustand des Bohrers (iO oder niO) präsentiert. Die Steuerungseinrichtung kann die präsentierten Informationen verallgemeinern, so dass sie auf Basis des gelernten Wissens in einer Produktivphase den Zustand des Bohrers auch auf Grund von bis dahin unbekannten digitalen Bildern beurteilen kann. Ein Beispiel für ein Machine-Learning-Verfahren sind Neuronale Netze.

Eine optische Erfassungseinrichtung, welche ein digitales Bild mit einer Farbe des Bohrers erfassen kann, und eine Steuerungseinrichtung, welche dazu vorgesehen ist, die Farbe des Bohrers zu prüfen und den Zustand des Bohrers auf Basis der Ergebnisse der genannten Prüfung der Farbe des Bohrers zu beurteilen, bilden eine Beurteilungsvorrichtung zur Beurteilung eines Zustands eines Bohrers einer Bohrvorrichtung. Eine derartige Beurteilungsvorrichtung stellt eine eigenständige Erfindung dar, die auch unabhängig von einer Montagevorrichtung verwendet werden kann.

In Ausgestaltung der Erfindung enthält das genannte digitale Bild Informationen über eine Aussenkontur des Bohrers. Die Steuerungseinrichtung ist dazu vorgesehen, die Aussenkontur des Bohrers zu prüfen und den Zustand des Bohrers auf Basis der Ergebnisse der genannten Prüfung der Aussenkontur des Bohrers zu beurteilen. Damit können einfach und zuverlässig mechanische Beschädigungen oder ein Verschleiss des Bohrers erkannt werden. Die Aussenkontur des Bohrers oder zumindest eines Teils des Bohrers kann mit einer gespeicherten Soll-Aussenkontur verglichen werden. Wenn die Aussenkontur zu stark von der Soll-Aussenkontur abweicht, kann die Steuerungseinrichtung den Zustand des Bohrers als niO einstufen. Ausserdem können auch wie schon beschrieben Machine-Learning Verfahren eingesetzt werden.

In Ausgestaltung der Erfindung ist die Steuerungseinrichtung dazu vorgesehen, Parameter eines Bohrvorgangs der Bohrvorrichtung zu erfassen, mit gespeicherten

Erwartungsparameter zu vergleichen und in Abhängigkeit des Ergebnisses des Vergleichs den Zustand des verwendeten Bohrers nach Abschluss des genannten Bohrvorgangs und vor Beginn eines folgenden Bohrvorgangs zu beurteilen. Durch den genannten Vergleich der Parameter eines Bohrvorgangs mit gespeicherten Erwartungsparametern können Bohrvorgänge identifiziert werden, bei denen es potentiell zu einer Schädigung des Bohrers kommen kann. Sobald ein solcher Bohrvorgang erkannt wird, wird der Zustand des Bohrers vor Beginn eines folgenden Bohrvorgangs geprüft. Damit kann wirkungsvoll verhindert werden, dass ein Bohrvorgang mit einem geschädigten Bohrer durchgeführt wird.

**In** Ausgestaltung der Erfindung ist die Steuerungseinrichtung dazu vorgesehen, als einen Parameter eines Bohrvorgangs eine Dauer des Bohrvorgangs zu erfassen, mit einem Erwartungsparameter in Form einer Grenzdauer zu vergleichen und den Zustand des verwendeten Bohrers nach Abschluss des genannten Bohrvorgangs und vor Beginn eines folgenden Bohrvorgangs zu beurteilen, wenn die erfasste Dauer des Bohrvorgangs grösser als die Grenzdauer ist. Wenn beim Bohren insbesondere in eine Gebäudewand aus Beton eine Armierung in Form eines Metallstabs angebohrt oder durchgebohrt werden muss, so ist die Dauer des Bohrvorgangs deutlich länger als wenn keine Armierung getroffen wird. Die genannte Grenzdauer kann insbesondere so festgelegt werden, dass eine Bohrung ohne Beeinträchtigung durch eine Armierung sicher abgeschlossen ist. Dauert ein Bohrvorgang dann länger als die festgelegte Grenzdauer, kann mit hoher Wahrscheinlichkeit davon ausgegangen werden, dass der Bohrer auf eine Armierung getroffen ist. Das An- oder Durchbohren einer Armierung führt zu einem erhöhten Verschleiss des Bohrers und insbesondere auch zu einer starken Erwärmung des Bohrers. Mit dieser Ausgestaltung der Erfindung wird besonders wirkungsvoll verhindert, dass ein Bohrvorgang mit einem geschädigten Bohrer durchgeführt wird.

In Ausgestaltung der Erfindung ist die Steuerungseinrichtung dazu vorgesehen, als einen Parameter eines Bohrvorgangs eine minimale Vorschubgeschwindigkeit des Bohrers während des Bohrvorgangs zu erfassen, mit einem Erwartungsparameter in Form einer Grenzgeschwindigkeit zu vergleichen und den Zustand des verwendeten Bohrers nach Abschluss des genannten Bohrvorgangs und vor Beginn eines folgenden Bohrvorgangs zu beurteilen, wenn die erfasste minimale Vorschubgeschwindigkeit während des Bohrvorgangs kleiner als die Grenzgeschwindigkeit ist. Wenn beim Bohren insbesondere in eine Gebäudewand aus Beton eine Armierung in Form eines Metallstabs angebohrt oder durchgebohrt werden muss, so ist die minimale Vorschubgeschwindigkeit während des Bohrvorgangs deutlich geringer, als wenn keine Armierung getroffen wird. Die genannte Grenzgeschwindigkeit kann insbesondere so festgelegt werden, dass die minimale Vorschubgeschwindigkeit ohne Beeinträchtigung durch eine Armierung sicher höher ist. Ist die minimale Vorschubgeschwindigkeit dann kleiner als die festgelegte Grenzgeschwindigkeit, kann mit hoher Wahrscheinlichkeit davon ausgegangen werden, dass der Bohrer auf eine Armierung getroffen ist. Mit dieser Ausgestaltung der Erfindung wird besonders wirkungsvoll verhindert, dass ein Bohrvorgang mit einem geschädigten Bohrer durchgeführt wird.

Das An- oder Durchbohren einer Armierung kann auch auf andere Weise erkannt werden. Beispielsweise kann die Montagevorrichtung über eine Armierungserkennungskomponente verfügen, mittels welcher Armierungen in einer Wand erkannt werden können.

In Ausgestaltung der Erfindung weist die Montagevorrichtung eine automatisierte Bohrer-Wechselvorrichtung auf. Die Steuerungseinrichtung ist dazu vorgesehen, die Montagevorrichtung für einen Wechsel des Bohrers der Bohrvorrichtung so anzusteuern, dass ein in der Bohrvorrichtung angeordneter Bohrer aus der Bohrvorrichtung entfernt und ein neuer Bohrer in der Bohrvorrichtung angeordnet wird. Wenn die Bohrvorrichtung von einer Installationskomponente geführt wird, steuert die Steuerungseinrichtung insbesondere die Installationskomponente so an, dass der Bohrer aus der Bohrvorrichtung entfernt und ein neuer Bohrer in der Bohrvorrichtung angeordnet wird.

Durch den damit möglichen automatisierten Wechsel des Bohrers ist für den Wechsel des Bohrers kein manueller Eingriff eines Bedieners der Montagevorrichtung möglich. Die Montagevorrichtung kann damit eine Vielzahl von Löchern ohne manuellen Eingriff eines Bedieners bohren. Das Bohren der Löcher kann damit sehr schnell und effizient durchgeführt werden.

Die Bohrer-Wechselvorrichtung kann beispielsweise aus einer Vorrichtung zum Entfernen eines Werkzeugs aus einem Werkzeughalter und einem Magazin entsprechend der nicht vorveröffentlichten europäischen Patentanmeldung der Anmelderin mit der Anmeldenummer 18186467.9 bestehen. **In** diesem Fall wird die Installationskomponente zuerst so angesteuert, dass der Bohrer zum Entfernen aus der Bohrvorrichtung in die genannte Vorrichtung eingeführt wird. Nach dem Entfernen des Bohrers wird die Installationskomponente so angesteuert, dass ein neuer Bohrer aus dem Magazin in der Bohrvorrichtung angeordnet wird.

Es wird darauf hingewiesen, dass einige der möglichen Merkmale und Vorteile der Erfindung hierin mit Bezug auf unterschiedliche Ausführungsformen der erfindungsgemässen Montagevorrichtung einerseits und des erfindungsgemässen Verfahren andererseits beschrieben sind. Ein Fachmann erkennt, dass die Merkmale in geeigneter Weise kombiniert, angepasst, übertragen oder ausgetauscht werden können, um zu weiteren Ausführungsformen der Erfindung zu gelangen.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu.

Dabei zeigen:
- Fig. 1: eine perspektivische Ansicht eines Aufzugschachts einer Aufzuganlage mit einer darin aufgenommenen Montagevorrichtung,
- Fig. 2: eine perspektivische Ansicht der Montagevorrichtung aus Fig. 1,
- Fig. 3: ein digitales Bild eines Teils eines Bohrers mit einer Krone und
- Fig. 4: die Krone des Bohrers aus Fig. 3 in einer vergrösserten Darstellung.

Im Folgenden wird eine Montagevorrichtung und ein Verfahren zum automatisierten Bohren von Löchern in Gebäudewände im Zusammenhang mit der Montage einer Aufzuganlage in einem Aufzugschacht beschrieben. Die Anwendung einer derartigen Montagevorrichtung und eines derartigen Verfahrens ist aber nicht auf den beschriebenen Anwendungsfall beschränkt, sondern kann auch zu anderen Zwecken verwendet werden. Dazu sind eventuell Anpassungen an der Montagevorrichtung und am Verfahren notwendig, die der Fachmann mit seinem Fachwissen und der übrigen Beschreibung problemlos durchführen kann.

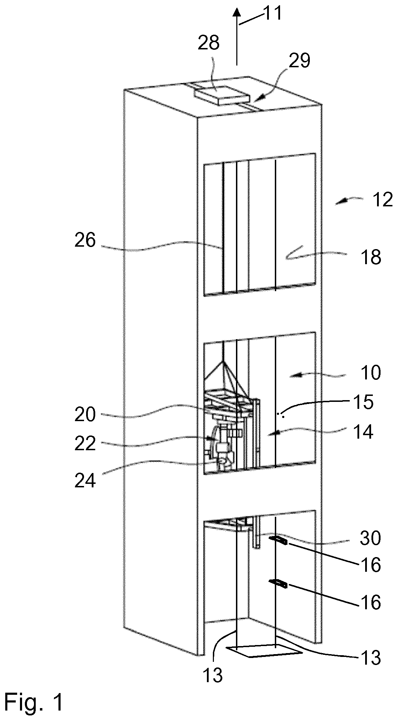

In Fig. 1 ist eine in einem Aufzugschacht 10 einer Aufzuganlage 12 angeordnete Montagevorrichtung 14 dargestellt, mittels welcher Schienenbügelunterteile 16 an einer Gebäudewand in Form einer Schachtwand 18 fixiert werden können. Dazu können von der Montagevorrichtung 14 Löcher 15 in die Schachtwand 18 gebohrt werden. Der Aufzugschacht 10 erstreckt sich in einer Haupterstreckungsrichtung 11, die in der Fig. 1 vertikal ausgerichtet ist. Über die Schienenbügelunterteile 16 können in einem späteren Montageschritt nicht dargestellte Führungsschienen der Aufzuganlage 12 an der Schachtwand 18 fixiert werden. Die Montagevorrichtung 14 weist eine Trägerkomponente 20 und eine mechatronische Installationskomponente 22 auf. Die Trägerkomponente 20 ist als Gestell ausgeführt, an dem die mechatronische Installationskomponente 22 montiert ist. Dieses Gestell weist Abmessungen auf, die ermöglichen, die Trägerkomponente 20 innerhalb des Aufzugschachts 10 vertikal zu verlagern, das heisst beispielsweise zu unterschiedlichen vertikalen Positionen an verschiedenen Stockwerken innerhalb eines Gebäudes zu verfahren. Die mechatronische Installationskomponente 22 ist im dargestellten Beispiel als Industrieroboter 24 ausgeführt, der nach unten hängend an dem Gestell der Trägerkomponente 20 angebracht ist. Ein Arm des Industrieroboters 24 kann dabei relativ zu der Trägerkomponente 20 bewegt werden und beispielsweise hin zur Schachtwand 18 des Aufzugschachts 10 verlagert werden.

Die Trägerkomponente 20 ist über ein als Tragmittel 26 dienendes Stahlseil mit einer Verlagerungskomponente 28 in Form einer motorisch angetriebenen Seilwinde verbunden, welche oben an dem Aufzugschacht 10 an einer Haltestelle 29 an der Decke des Aufzugschachts 10 angebracht ist. Mithilfe der Verlagerungskomponente 28 kann die Montagevorrichtung 14 innerhalb des Aufzugschachts 10 in Haupterstreckungsrichtung 11 des Aufzugschachts 10, also vertikal über eine gesamte Länge des Aufzugschachts 10 hin verlagert werden.

Die Montagevorrichtung 14 weist ferner eine Fixierkomponente 30 auf, mithilfe derer die Trägerkomponente 20 innerhalb des Aufzugschachts 10 in seitlicher Richtung, das heisst in horizontaler Richtung, fixiert werden kann.

Im Aufzugschacht 10 sind über dessen gesamte Länge zwei Referenzelemente 13 in Form von Schnüren gespannt, die entlang der Haupterstreckungsrichtung 11 ausgerichtet sind. Die Referenzelemente 13 werden von einem Monteur im Aufzugschacht 10 angebracht und bilden die Referenz für die Ausrichtung und Montage von Führungsschienen der Aufzuganlage 12. Die Führungsschienen müssen damit in montiertem Zustand parallel zu den Referenzelementen 13 und in einem bestimmten Abstand zu den Referenzelementen 13 verlaufen. Aus dem Verlauf der Referenzelemente 13 kann der Verlauf der Führungsschienen und damit auf die Soll-Positionen der Schienenbügelunterteile 16 an der Schachtwand 18 geschlossen werden. Aus den Soll-Positionen der Schienenbügelunterteile 16 ergeben sich Soll-Positionen der Löcher 15 in der Schachtwand 18.

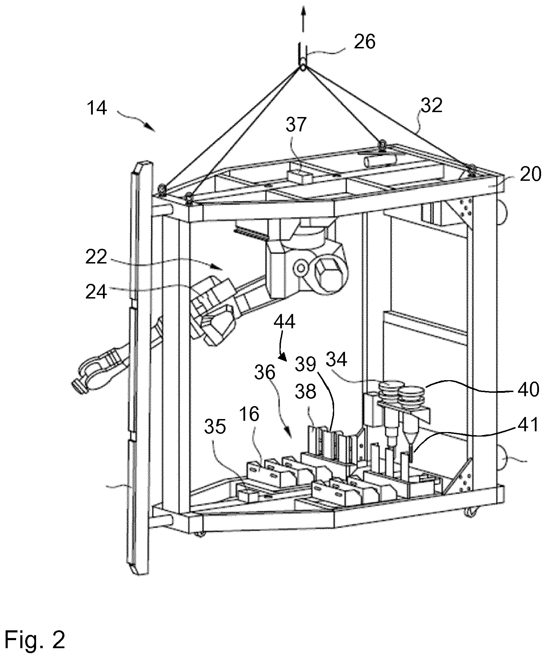

Fig. 2 zeigt eine vergrößerte Ansicht einer Montagevorrichtung 14.

Die Trägerkomponente 20 ist als käfigartiges Gestell ausgebildet, bei dem mehrere horizontal und vertikal verlaufende Holme eine mechanisch belastbare Struktur bilden. Oben an der käfigartigen Trägerkomponente 20 sind Halteseile 32 angebracht, welche mit dem Tragmittel 26 verbunden werden können.

In der dargestellten Ausführungsform ist die mechatronische Installationskomponente 22 mithilfe eines Industrieroboters 24 ausgeführt. In dem dargestellten Beispiel ist der Industrieroboter 24 mit mehreren um Schwenkachsen verschwenkbaren Roboterarmen ausgestattet. Beispielsweise kann der Industrieroboter mindestens sechs Freiheitsgrade aufweisen, das heisst, ein von dem Industrieroboter 24 geführtes Montagewerkzeug 34, 40 kann mit sechs Freiheitsgraden bewegt werden, das heisst beispielsweise mit drei Rotationsfreiheitsgraden und drei Translationsfreiheitsgraden. Beispielsweise kann der Industrieroboter als Vertikal-Knickarmroboter, als Horizontal-Knickarmroboter oder als SCARA-Roboter oder als kartesischer Roboter bzw. Portalroboter ausgeführt sein.

Der Roboter kann an seinem freitragenden Ende mit verschiedenen Montagewerkzeugen 34, 40 gekoppelt werden. Die Montagewerkzeuge 34, 40 können sich hinsichtlich ihrer Auslegung und ihres Einsatzzweckes unterscheiden. Die Montagewerkzeuge 34, 40 können an der Trägerkomponente 20 derart gehalten werden, dass das freitragende Ende des Industrieroboters 24 an sie herangefahren werden und mit einem von ihnen gekoppelt werden kann. Der Industrieroboter 24 kann hierzu beispielsweise über ein Werkzeugwechselsystem verfügen, das so ausgebildet ist, dass es mindestens die Handhabung mehrerer solcher Montagewerkzeuge 34, 40 ermöglicht.

Eines der Montagewerkzeuge 34 ist als Sensor, beispielsweise als Laserscanner ausgeführt, mittels welchem die relative Lage der Trägerkomponente 20 gegenüber den Referenzelementen 13 bestimmt werden kann. Dies kann beispielsweise mit einem Verfahren durchgeführt werden, das in der WO 2017/167719 A1 beschrieben ist. Aus der relativen Lage der Trägerkomponente 20 gegenüber den Referenzelementen 13 kann die Position der Trägerkomponente 20 im Aufzugschacht 10 ermittelt werden. Ausgehend von der Position der Trägerkomponente 20 kann bestimmt werden, an welchen Stellen der Schachtwand 18 ein Schienenbügelunterteil 16 befestigt werden soll. Damit können die Soll-Position eines Schienenbügelunterteils 16 an der Schachtwand 18 und die Soll-Positionen der entsprechenden Löcher 15 bestimmt werden.

Eines der Montagewerkzeuge 34 ist als eine Armierungsdetektionskomponente ausgeführt. Die Armierungsdetektionskomponente ist dazu ausgelegt, eine Armierung innerhalb der Schachtwand 18 zu detektieren. Hierzu kann sich die Armierungsdetektionskomponente beispielsweise physikalischer Messmethoden bedienen, bei denen elektrische und/oder magnetische Eigenschaften der typischerweise metallischen Armierung innerhalb einer Betonwand genutzt werden, um diese Armierung positionsgenau zu erkennen.

Eines der Montagewerkzeuge ist als eine Bohrvorrichtung 40 mit einem Bohrer 41, ähnlich einer Schlagbohrmaschine, ausgestaltet. Durch Kopplung des Industrieroboters 24 mit einer solchen Bohrvorrichtung 40 ist die Installationskomponente 22 dazu ausgestaltet, ein zumindest teilweise automatisiert gesteuertes Bohren von Löchern 15 in einer der Schachtwände 18 des Aufzugschachts 10 zu ermöglichen. Die Bohrvorrichtung 40 kann hierbei von dem Industrieroboter 24 derart bewegt und gehandhabt werden, dass die Bohrvorrichtung mit dem Bohrer 41 an einer vorgesehenen Bohrposition Löcher 15 in die Schachtwand 18 des Aufzugschachts 10 bohrt, in die später Befestigungsmittel in Form Ankerbolzen zur Fixierung von Schienenbügelunterteilen eingeschlagen werden.

Ein weiteres Montagewerkzeug 34 ist als Einschlagwerkzeug ausgestaltet, um zumindest teilautomatisch Ankerbolzen in zuvor gebohrte Bohrlöcher in die Schachtwand 18 des Aufzugschachts 10 einzuschlagen.

Ein weiteres Montagewerkzeug 34 ist als ein Greifer ausgestaltet, um zumindest teilautomatisch ein Schienenbügelunterteil 16 an der Schachtwand 18 zu befestigen.

An der Trägerkomponente 20 kann ferner eine Magazinkomponente 36 vorgesehen sein. Die Magazinkomponente 36 kann dazu dienen, zu installierende Schienenbügelunterteile 16 zu lagern und der Installationskomponente 22 bereitzustellen. In der Magazinkomponente 36 können auch Ankerbolzen gelagert und bereitgestellt werden, die mithilfe der Installationskomponente 22 in vorgefertigte Bohrlöcher in der Schachtwand 18 eingeschlagen werden können.

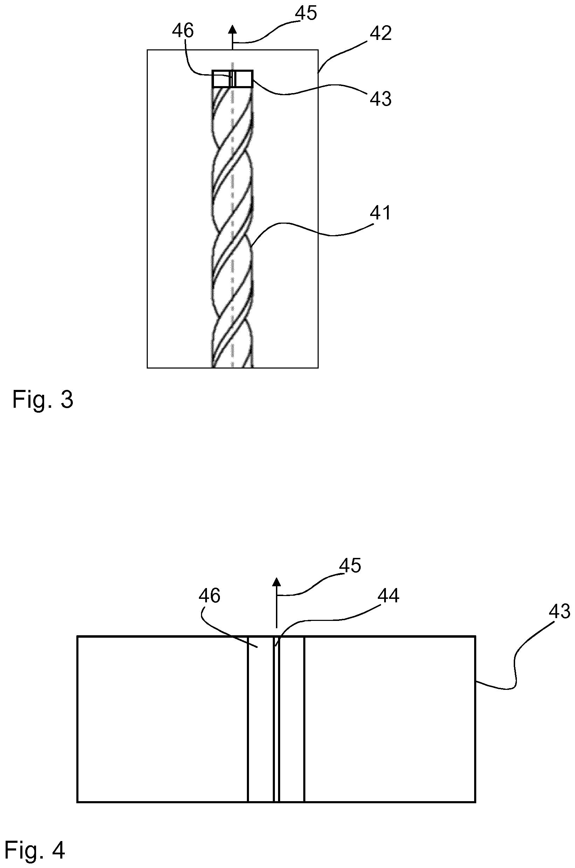

Im unteren Bereich der Trägerkomponente 20 ist eine optische Erfassungseinrichtung in Form einer Digital Kamera 35 angeordnet. Die Digital-Kamera 35 ist so positioniert, dass die Bohrvorrichtung 40 und damit der Bohrer 41 so mittels des Industrieroboters 24 vor der Digital-Kamera 35 positioniert werden können, dass die Digital-Kamera 35 ein digitales Bild (42 in Fig. 3) zumindest eines Teils des Bohrers 41 erfassen kann. Der Bohrer 41 wird insbesondere in mehreren verschiedenen Positionen vor der Digital-Kamera 35 positioniert, so dass die Digital-Kamera 35 mehrere digitale Bilder von unterschiedlichen Teilen des Bohrers 41 und/oder aus unterschiedlichen Blickwinkeln erfassen kann. In Fig. 3 ist beispielhaft ein digitales Bild 42 des vorderen Bereichs des Bohrers 41 dargestellt. Der Bohrer 41 weist an seiner Spitze eine Krone 43 aus Hartmetall auf, die über eine nicht dargestellte Lotverbindung mit dem restlichen Bohrer verbunden ist.

Im oberen Bereich der Trägerkomponente 20 ist eine Steuerungseinrichtung 37 zur Ansteuerung der Montagevorrichtung 14 und damit unter anderem zur Ansteuerung des Industrieroboters 22, der Bohrvorrichtung 40 und der Digital-Kamera 35 angeordnet. Die Steuerungseinrichtung 37 steht mit nicht dargestellten Signalleitungen mit den genannten Komponenten in Signalverbindung. Die Steuerungseinrichtung 37 wertet das von der Digital-Kamera 35 vom Bohrer 41 erfasste digitale Bild aus und beurteilt dabei einen Zustand des Bohrers 41.

Die Steuerungseinrichtung 37 ist so programmiert ist, dass sie auf Basis des einen digitalen Bilds 42 oder der mehreren digitalen Bilder 42 zwei Zustände, nämlich den Zustand "in Ordnung" (iO) und den Zustand "nicht in Ordnung" (niO) unterscheidet. Im Folgenden wird auf die Auswertung eines einzigen digitalen Bilds 42 eingegangen. Wenn mehrere digitale Bilder ausgewertet werden, so wird der Zustand iO des Bohrers 41 nur dann erkannt, wenn sich der Zustand iO bei der Auswertung aller digitalen Bilder ergibt.

Wenn die Steuerungseinrichtung 37 den Zustand des Bohrers 41 als iO beurteilt, so wird der Bohrer 41 weiterverwendet, es werden also weitere Löcher 15 mit dem Bohrer 41 gebohrt. Wenn die Steuerungseinrichtung 37 den Zustand des Bohrers 41 als niO beurteilt, so veranlasst sie einen Wechsel des Bohrers 41, welcher insbesondere automatisch, also ohne Beteiligung eines Bedieners der Montagevorrichtung 14 ausgeführt wird.

Um einen automatischen Wechsel des Bohrers 41 zu ermöglichen, weist die Montagevorrichtung 14 eine Bohrer-Wechselvorrichtung 44 auf, die aus einer Vorrichtung 38 zum Entfernen eines Werkzeugs aus einem Werkzeughalter und einem Magazin 39 besteht. Das Magazin 39 stellt dabei nicht dargestellte neue Bohrer 41 zur Verfügung, die von der Bohrvorrichtung 40 nach dem Entfernen des alten Bohrers 41 aufgenommen werden können. Die Vorrichtung 38 und das Magazin 39 sind entsprechend der nicht vorveröffentlichten europäischen Patentanmeldung der Anmelderin mit der Anmeldenummer 18186467.9 ausgeführt. Zum Wechsel eines Bohrers 41 wird zunächst die Bohrvorrichtung 40 mit dem Bohrer 41 vom Industrieroboter 24 so bewegt, dass der Bohrer 41 in die Vorrichtung 38 eingeführt und dabei aus der Bohrvorrichtung 40 entfernt wird. Anschliessend wird die Bohrvorrichtung 40 so bewegt, dass sie einen neuen Bohrer 41 aus dem Magazin 39 aufnimmt. Mit dem neuen Bohrer 41 kann das Bohren von Löchern 15 in die Schachtwand 18 fortgesetzt werden.

Die Steuerungseinrichtung 37 wiederholt die Beurteilung des Zustands des Bohrers 41 in regelmässigen Abständen. Sie wiederholt die Beurteilung nach dem Bohren einer festgelegten Anzahl von Löchern, beispielsweise jeweils nach 8 Löchern.

Die Steuerungseinrichtung 37 erfasst bei jedem Bohren eines Lochs 15 eine Dauer des Bohrvorgangs und vergleicht die erfasste Dauer mit einer festgelegten und abgespeicherten Grenzdauer. Wenn die erfasste Dauer länger als die genannte Grenzdauer ist, beurteilt sie vor Beginn eines folgenden Bohrvorgangs den Zustand des Bohrers 41 und wechselt ihn falls notwendig aus.

Ausserdem erfasst die Steuerungseinrichtung bei jedem Bohren eines Lochs 15 eine minimale Vorschubgeschwindigkeit des Bohrers 41 und vergleicht die erfasste minimale Vorschubgeschwindigkeit mit einer festgelegten und gespeicherten Grenzgeschwindigkeit. Wenn die erfasste Minimalgeschwindigkeit kleiner als die Grenzgeschwindigkeit ist, beurteilt sie vor Beginn eines folgenden Bohrvorgangs den Zustand des Bohrers 41 und wechselt ihn falls notwendig aus.

Das digitale Bild 42 enthält Informationen über eine Farbe des Bohrers 41, was in Fig. 3 nicht darstellbar ist. Die Steuerungseinrichtung 37 prüft die Farbe des Bohrers 41 und beurteilt den Zustand des Bohrers 41 auf Basis der Ergebnisse der genannten Prüfung. Aus der Farbe des Bohrers 41 lässt sich ableiten, ob der Bohrer 41 während einer vorhergehenden Bohrung sehr heiss geworden ist. Bei einer sehr starken Erwärmung läuft der Bohrer 41 blau an, was von der Steuerungseinrichtung 37 erkannt wird. Die Steuerungseinrichtung 37 stuft Zustand des Bohrers als niO ein, wenn sie eine für ein Überhitzen des Bohrers 41 typische Farbe in dem digitalen Bild 42 erkennt.

Die Steuerungseinrichtung 37 wertet hauptsächlich die Farbe im Bereich der Spitze des Bohrers 41 aus. Sie kann ausserdem eine Vorverarbeitung durchführen, bei der zusammenhängende Bereiche des Bohrers 41 mit ähnlicher Farbe identifiziert werden. Dies kann beispielsweise mit einer so genannten Blob-Analyse durchgeführt werden. Eine Farbe wird dann nur berücksichtigt, wenn sie auf einer zusammenhängenden Fläche oder einer Gesamtfläche mit einem festgelegten und gespeicherten Mindest-Flächeninhalt vorkommt.

Bei der Prüfung der Farbe des Bohrers 41 vergleicht die Steuerungseinrichtung 37 die Farbe des Bohrers 41 mit gespeicherten Vergleichsfarben, welche für eine zu starke Erwärmung des Bohrers 41 typisch sind. Wenn die Farbe des Bohrers 41 mit einer Vergleichsfarbe übereinstimmt, wird der der Zustand des Bohrers als niO eingestuft.

Die Steuerungseinrichtung 37 kann auch einen Blauanteil der Farbe des Bohrers 41 bestimmen und den Zustand des Bohrers 41 auf Basis des genannten Blauanteils beurteilen. Die Steuerungseinrichtung 37 stuft den Zustand des Bohrers 41 dann als niO ein, wenn der Blauanteil einen festgelegten und gespeicherten Schwellwert überschreitet.

Das digitale Bild 42 enthält auch Informationen über eine Aussenkontur des Bohrers 41.

Die Steuerungseinrichtung 37 prüft die Aussenkontur des Bohrers 41 und beurteilt den Zustand des Bohrers 41 auf Basis der Ergebnisse der genannten Prüfung der Aussenkontur des Bohrers 41. Dazu vergleicht die Steuerungseinrichtung 37 die Aussenkontur des Bohrers 41 mit einer gespeicherten Soll-Aussenkontur. Wenn die Aussenkontur des Bohrers 41 zu stark von der Soll-Aussenkontur abweicht, stuft die Steuerungseinrichtung 37 den Zustand des Bohrers 41 als niO ein.

Wie in Fig. 4 dargestellt, weist die Krone 43 des Bohrers 41 eine Verschleissmarke in Form einer nach innen gerichteten und in einer Axialrichtung 45 verlaufenden Nut 44 auf. Die Nut 44 ist an einer Aussenfläche eines von insgesamt vier, rechtwinklig zueinander angeordneten Stegen 46 der Krone 43 angeordnet. Der Bohrer 41 wird so vor der Digital-Kamera 35 positioniert, dass ein digitales Bild des Stegs 46 mit der Nut 44 erfasst werden kann. Solange die Steuerungseinrichtung 37 die Nut 44 in dem digitalen Bild erkennt, stuft sie den Bohrer 41 als iO ein. Wenn sie die Nut 44 in dem digitalen Bild nicht mehr erkennen kann, dann ist ein Verschleiss an der Aussenkontur der Krone 43 zu gross und damit ein Durchmesser der Krone 43 zu klein, um den Bohrer 41 weiter verwenden zu können. Damit stuft die Steuerungseinrichtung 37 den Bohrer 41 als niO ein, sobald sie die Nut 44 im digitalen Bild des Bohrers 41 nicht mehr erkennen kann.

Abschliessend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, sofern diese Kombinationen den Schutzumfang des nachfolgenden Anspruchssatzes nicht verletzen. Bezugszeichen in den Ansprüchen sind nicht als Einschränkung anzusehen.

## Patentansprüche

1. Montagevorrichtung zum automatisierten Bohren von Löchern (15) in Gebäudewände (18),
aufweisend eine Bohrvorrichtung (40) mit einem Bohrer (41),
**gekennzeichnet durch**
- eine optische Erfassungseinrichtung (35) zur Erfassung eines digitalen Bilds (42) zumindest eines Teils des Bohrers (41) der Bohrvorrichtung (40) und
- eine Steuerungseinrichtung (37) zur Ansteuerung der Bohrvorrichtung (40) und der optischen Erfassungseinrichtung (35),
wobei die Steuerungseinrichtung (37) dazu vorgesehen ist, das genannte digitale Bild (42) auszuwerten und dabei einen Zustand des Bohrers (41) zu beurteilen und
das genannte digitale Bild (42) Informationen über eine Farbe des Bohrers (41) enthält und die Steuerungseinrichtung (37) dazu vorgesehen ist, die Farbe des Bohrers (41) zu prüfen, einen Blauanteil der Farbe zu bestimmen und den Zustand des Bohrers (41) auf Basis der Ergebnisse der genannten Prüfung der Farbe der Farbe des Bohrers (41) und des genannten Blauanteils zu beurteilen.

2. Montagevorrichtung nach Anspruch 1,
**dadurch gekennzeichnet, dass**
die Steuerungseinrichtung (37) dazu vorgesehen ist, auf Basis des erkannten Zustands des Bohrers (41) zu entscheiden, den Bohrer (41) weiterzuverwenden oder einen Wechsel des Bohrers (41) zu veranlassen.

3. Montagevorrichtung nach Anspruch 1 oder 2,
**gekennzeichnet durch**
eine mechatronische Installationskomponente (22, 24) zum Führen der Bohrvorrichtung (40), wobei die mechatronische Installationskomponente (22, 24) von der Steuerungseinrichtung (37) angesteuert wird und die Steuerungseinrichtung (37) dazu vorgesehen ist, die Installationskomponente (22, 24) so anzusteuern, dass die Bohrvorrichtung (40) und der Bohrer (41) so vor der optischen Erfassungsvorrichtung (35) positioniert werden, dass ein digitales Bild (42) zumindest eines Teils des Bohrers (41) erfasst werden kann.

4. Montagevorrichtung nach Anspruch 3,
**dadurch gekennzeichnet, dass**
die Steuerungseinrichtung (37) dazu vorgesehen ist, die Installationskomponente (22, 24) so anzusteuern, dass die Bohrvorrichtung (40) und der Bohrer (41) so vor der optischen Erfassungsvorrichtung (35) positioniert werden, dass von einer am Bohrer (41) angeordneten Verschleissmarke (44) ein digitales Bild (42) erfasst werden kann.

5. Montagevorrichtung nach einem der Ansprüche 1 bis 4,
**dadurch gekennzeichnet, dass**
das genannte digitale Bild (42) Informationen über eine Aussenkontur des Bohrers (41) enthält, wobei die Steuerungseinrichtung (37) dazu vorgesehen ist, die Aussenkontur des Bohrers (41) zu prüfen und den Zustand des Bohrers (41) auf Basis der Ergebnisse der genannten Prüfung der Aussenkontur des Bohrers (41) zu beurteilen.

6. Montagevorrichtung nach einem der Ansprüche 1 bis 5,
**dadurch gekennzeichnet, dass**
die Steuerungseinrichtung (37) dazu vorgesehen ist, Parameter eines Bohrvorgangs der Bohrvorrichtung (40) zu erfassen, mit gespeicherten Erwartungsparameter zu vergleichen und in Abhängigkeit des Ergebnisses des Vergleichs den Zustand des verwendeten Bohrers (41) nach Abschluss des genannten Bohrvorgangs und vor Beginn eines folgenden Bohrvorgangs zu beurteilen.

7. Montagevorrichtung nach Anspruch 6,
**dadurch gekennzeichnet, dass**
die Steuerungseinrichtung (37) dazu vorgesehen ist, als einen Parameter eines Bohrvorgangs eine Dauer des Bohrvorgangs zu erfassen, mit einem Erwartungsparameter in Form einer Grenzdauer zu vergleichen und den Zustand des verwendeten Bohrers (41) nach Abschluss des genannten Bohrvorgangs und vor Beginn eines folgenden Bohrvorgangs zu beurteilen, wenn die erfasste Dauer des Bohrvorgangs grösser als die Grenzdauer ist.

8. Montagevorrichtung nach Anspruch 6 oder 7,
**dadurch gekennzeichnet, dass**
die Steuerungseinrichtung (37) dazu vorgesehen ist, als einen Parameter eines Bohrvorgangs eine minimale Vorschubgeschwindigkeit des Bohrers (37) während des Bohrvorgangs zu erfassen, mit einem Erwartungsparameter in Form einer Grenzgeschwindigkeit zu vergleichen und den Zustand des verwendeten Bohrers (41) nach Abschluss des genannten Bohrvorgangs und vor Beginn eines folgenden Bohrvorgangs zu beurteilen, wenn die erfasste minimale Vorschubgeschwindigkeit während des Bohrvorgangs kleiner als die Grenzgeschwindigkeit ist.

9. Montagevorrichtung nach einem der Ansprüche 2 bis8,
**gekennzeichnet durch**
eine automatisierte Bohrer-Wechselvorrichtung (44), wobei die Steuerungseinrichtung (37) dazu vorgesehen ist, die Montagevorrichtung (14) für einen Wechsel des Bohrers (41) der Bohrvorrichtung (40) so anzusteuern, dass ein in der Bohrvorrichtung (40) angeordneter Bohrer (41) aus der Bohrvorrichtung (40) entfernt und ein neuer Bohrer (41) in der Bohrvorrichtung (40) angeordnet wird.

10. Verfahren zur Beurteilung eines Zustands eines Bohrers (41) einer Bohrvorrichtung (40) einer Montagevorrichtung (14) zum automatisierten Bohren von Löchern (15) in Gebäudewände (18), bei welchem
- mittels einer an der Montagevorrichtung (14) angeordneten optischen Erfassungseinrichtung (35) ein digitales Bild (42) zumindest eines Teils des Bohrers (41) der Bohrvorrichtung (40) erfasst wird,
- die Bohrvorrichtung (40) und die optische Erfassungseinrichtung (35) von einer Steuerungseinrichtung (37) angesteuert werden und
- die Steuerungseinrichtung (37) das genannte digitale Bild (42) auswertet und dabei einen Zustand des Bohrers (41) beurteilt und
das genannte digitale Bild (42) Informationen über eine Farbe des Bohrers (41) enthält und die Steuerungseinrichtung (37) die Farbe des Bohrers (41) prüft, einen Blauanteil der Farbe bestimmt und den Zustand des Bohrers (41) auf Basis der Ergebnisse der genannten Prüfung der Farbe des Bohrers (41) und des genannten Blauanteils beurteilt.

11. Verfahren nach Anspruch 10,
**dadurch gekennzeichnet, dass**
das genannte digitale Bild (42) Informationen über eine Aussenkontur des Bohrers (41) enthält und die Steuerungseinrichtung (37) die Aussenkontur des Bohrers (41) prüft und den Zustand des Bohrers (41) auf Basis der Ergebnisse der genannten Prüfung der Aussenkontur des Bohrers (41) beurteilt.

## Claims

1. Mounting device for the automated drilling of holes (15) in building walls (18), comprising a drilling device (40) with a drill bit (41),
**characterized by**
- an optical detection device (35) for detecting a digital image (42) of at least a part of the drill bit (41) of the drilling device (40), and
- a control device (37) for controlling the drilling device (40) and the optical detection device (35),
wherein the control device (37) is provided to evaluate said digital image (42) and thereby assess a condition of the drill bit (41), and
said digital image (42) contains information about a color of the drill bit (41), and the control device (37) is provided for checking the color of the drill bit (41), determining a blue component of the color and assessing the condition of the drill bit (41) on the basis of the results of said checking of the color of the drill bit (41) and said blue component.

2. Mounting device according to Claims 1,
**characterized in that**
the control device (37) is provided for deciding, on the basis of the detected state of the drill bit (41), to continue using the drill bit (41) or to initiate a change of the drill bit (41).

3. Mounting device according to Claims 1 or 2,
**characterized by**
a mechatronic installation component (22, 24) for guiding the drilling device (40), wherein the mechatronic installation component (22, 24) is controlled by the control device (37) and the control device (37) is provided for controlling the installation component (22, 24) such that the drilling device (40) and the drill bit (41) are positioned in front of the optical detection device (35) such that a digital image (42) of at least a part of the drill bit (41) can be detected.

4. Mounting device according to Claims 3,
**characterized in that**
the control device (37) is provided for controlling the installation component (22, 24) in such a way that the drilling device (40) and the drill bit (41)are positioned in front of the optical detection device (35) in such a way that a digital image (42) can be detected from a wear mark (44) arranged on the drill (41).

5. Mounting device according to one of Claims 1 to 4,
**characterized in that**
said digital image (42) contains information about an outer contour of the drill (41), wherein the control device (37) is provided to check the outer contour of the drill bit (41)and to assess the condition of the drill bit (41)based on the results of said checking of the outer contour of the drill (41).

6. Mounting device according to one of Claims 1 to 5,
**characterized in that**
the control device (37) is provided for detecting parameters of a drilling operation of the drilling device (40), comparing them with stored expected parameters and, depending on the result of the comparison, assessing the state of the drill bit (41)used after completion of said drilling operation and before the start of a subsequent drilling operation.

7. Mounting device according to Claims 6,
**characterized in that**
the control device (37) is provided for detecting, as a parameter of a drilling operation, a duration of the drilling operation, comparing it with an expected parameter in the form of a limit duration and assessing the state of the drill bit (41)used after completion of the said drilling operation and before the start of a subsequent drilling operation if the detected duration of the drilling operation is greater than the limit duration.

8. Mounting device according to Claims 6 or 7,
**characterized in that**
the control device (37) is provided to detect a minimum feed rate of the drill (37) during the drilling operation as a parameter of a drilling operation, to compare it with an expected parameter in the form of a limiting speed and to assess the state of the drill bit (41)used after completion of said drilling operation and before the start of a subsequent drilling operation if the detected minimum feed rate during the drilling operation is less than the limiting speed

9. Mounting device according to one of Claims 2 to 8,
**characterized by**
an automated drill bit changing device (44), wherein the control device (37) is provided for controlling the mounting device (14) for a change of the drill bit (41) of the drilling device (40) in such a way that a drill bit (41) arranged in the drilling device (40) is removed from the drilling device (40) and a new drill bit (41) is arranged in the drilling device (40).

10. Method for assessing a condition of a drill bit (41) of a drilling device (40) of an Mounting device (14) for automated drilling of holes (15) in building walls (18), in which
- a digital image (42) of at least a part of the drill bit (41) of the drilling device (40) is captured by means of an optical detection device (35) arranged on the mounting device (14),
- the drilling device (40) and the optical detection device (35) are controlled by a control device (37), and
- the control device (37) evaluates said digital image (42) and thereby assesses a condition of the drill (41), and
said digital image (42) contains information about a color of the drill bit (41), and the control device (37) checks the color of the drill bit (41), determines a blue component of the color, and judges the condition of the drill bit (41) based on the results of said checking of the color of the drill bit (41) and said blue component.

11. Method according to Claims 10,
**characterized in that**
said digital image (42) contains information about an outer contour of the drill bit (41) and the control device (37) checks the outer contour of the drill bit (41) and assesses the condition of the drill bit (41) on the basis of the results of said check of the outer contour of the drill bit (41).

## Revendications

1. Dispositif de montage permettant le perçage automatisé de trous (15) dans des parois de bâtiments (18),
présentant un dispositif de perçage (40) comportant un foret (41),
**caractérisé par**
- un système d'acquisition optique (35) pour l'acquisition d'une image numérique (42) d'au moins une partie du foret (41) du dispositif de perçage (40) et
- un système de commande (37) pour la commande du dispositif de perçage (40) et du système d'acquisition optique (35),
dans lequel le système de commande (37) est prévu pour évaluer ladite image numérique (42) et juger ainsi d'un état du foret (41) et
ladite image numérique (42) contient des informations sur une couleur du foret (41) et le système de commande (37) est prévu pour vérifier la couleur du foret (41), déterminer une proportion de bleu de la couleur et juger l'état du foret (41) sur la base des résultats de ladite vérification de la couleur de la couleur du foret (41) et de ladite proportion de bleu.

2. Dispositif de montage selon la revendication 1,
**caractérisé en ce que**
le système de commande (37) est prévu pour décider, sur la base de l'état reconnu du foret (41), de continuer à utiliser le foret (41) ou de provoquer un changement du foret (41).

3. Dispositif de montage selon la revendication 1 ou 2,
**caractérisé par**
un composant d'installation mécatronique (22, 24) pour le guidage du dispositif de perçage (40), dans lequel le composant d'installation mécatronique (22, 24) est commandé par le système de commande (37) et le système de commande (37) est prévu pour commander le composant d'installation (22, 24) de telle sorte que le dispositif de perçage (40) et le foret (41) sont positionnés devant le système d'acquisition optique (35) de telle sorte qu'une image numérique (42) d'au moins une partie du foret (41) peut être acquise.

4. Dispositif de montage selon la revendication 3,
**caractérisé en ce que**
le système de commande (37) est prévu pour commander le composant d'installation (22, 24) de telle sorte que le dispositif de perçage (40) et le foret (41) sont positionnés devant le système d'acquisition optique (35) de telle sorte qu'une image numérique (42) d'une marque d'usure (44) disposée sur le foret (41) peut être acquise.

5. Dispositif de montage selon l'une des revendications 1 à 4,
**caractérisé en ce que**
ladite image numérique (42) contient des informations sur un contour extérieur du foret (41), dans lequel le système de commande (37) est prévu pour vérifier le contour extérieur du foret (41) et pour juger l'état du foret (41) sur la base des résultats de ladite vérification du contour extérieur du foret (41).

6. Dispositif de montage selon l'une des revendications 1 à 5,
**caractérisé en ce que**
le système de commande (37) est prévu pour acquérir des paramètres d'une opération de perçage du dispositif de perçage (40), pour les comparer à des paramètres attendus mémorisés et pour juger, en fonction du résultat de la comparaison, l'état du foret (41) utilisé après la fin de ladite opération de perçage et avant le début d'une opération de perçage suivante.

7. Dispositif de montage selon la revendication 6,
**caractérisé en ce que**
le système de commande (37) est prévu pour acquérir, en tant que paramètre d'une opération de perçage, une durée de l'opération de perçage, pour la comparer à un paramètre attendu sous la forme d'une durée limite et pour juger l'état du foret (41) utilisé après la fin de ladite opération de perçage et avant le début d'une opération de perçage suivante, si la durée acquise de l'opération de perçage est supérieure à la durée limite.

8. Dispositif de montage selon la revendication 6 ou 7,
**caractérisé en ce que**
le système de commande (37) est prévu pour acquérir, en tant que paramètre d'une opération de perçage, une vitesse d'avance minimale du foret (37) pendant l'opération de perçage, pour la comparer à un paramètre attendu sous la forme d'une vitesse limite et pour juger l'état du foret (41) utilisé après la fin de ladite opération de perçage et avant le début d'une opération de perçage suivante, si la vitesse d'avance minimale acquise pendant l'opération de perçage est inférieure à la vitesse limite.

9. Dispositif de montage selon l'une des revendications 2 à 8,
**caractérisé par**
un dispositif automatisé de changement de foret (44), dans lequel le système de commande (37) est prévu pour commander le dispositif de montage (14) pour un changement du foret (41) du dispositif de perçage (40) de telle sorte qu'un foret (41) disposé dans le dispositif de perçage (40) est retiré du dispositif de perçage (40) et qu'un nouveau foret (41) est disposé dans le dispositif de perçage (40).

10. Procédé pour le jugement de l'état d'un foret (41) d'un dispositif de perçage (40) d'un dispositif de montage (14) pour le perçage automatisé de trous (15) dans des parois de bâtiments (18), selon lequel
- une image numérique (42) d'au moins une partie du foret (41) du dispositif de perçage (40) est acquise à l'aide d'un système d'acquisition optique (35) disposé sur le dispositif de montage (14),
- le dispositif de perçage (40) et le système d'acquisition optique (35) sont commandés par un système de commande (37) et
- le système de commande (37) évalue ladite image numérique (42) et juge ainsi un état du foret (41) et
ladite image numérique (42) contient des informations sur une couleur du foret (41) et le système de commande (37) vérifie la couleur du foret (41), détermine une proportion de bleu de la couleur et juge l'état du foret (41) sur la base des résultats de ladite vérification de la couleur du foret (41) et de ladite proportion de bleu.

11. Procédé selon la revendication 10,
**caractérisé en ce que**
ladite image numérique (42) contient des informations sur un contour extérieur du foret (41) et le système de commande (37) vérifie le contour extérieur du foret (41) et juge l'état du foret (41) sur la base des résultats de ladite vérification du contour extérieur du foret (41).
